# EUROPEAN PATENT SPECIFICATION

(11) **EP 2 274 072 B1**
(45) Date of publication and mention of the grant of the patent: **14.10.2015**
(21) Application number: 09722003.2
(22) Date of filing: 19.02.2009
(51) Int. Cl.: B01D 53/14, C10L 3/10, B01D 53/18

(54) **GAS TREATMENT APPARATUS USING A WATER FLOODED SCREW COMPRESSOR**
GASBEHANDLUNGSVORRICHTUNG MIT WASSERGEFLUTETEM SCHRAUBENVERDICHTER
APPAREIL DE TRAITEMENT DE GAZ UTILISANT UN COMPRESSEUR À VIS REMPLI D'EAU

(30) Priority: 20.03.2008 NZ 56684508; 10.10.2008 NZ 57194808
(43) Date of publication of application: 19.01.2011
(73) Proprietor: PT Biogas Technology Limited, Sheffield S9 1BT (GB)
(72) Inventor: BROADBENT, John Stephen, Parnell, Auckland (NZ)
(74) Representative: Boult Wade Tennant
(86) International application number: PCT/NZ2009/000021
(87) International publication number: WO 2009/116878

(56) References cited:
- EP-A1- 1 811 011
- WO-A1-99/11937
- WO-A1-2008/115079
- US-A- 3 535 057
- US-A- 4 449 994
- US-A1- 2006 213 370
- US-B1- 6 174 148
- "Greenlane Biogas Upgrading Systems", , 1 November 2006 (2006-11-01), pages 1-4, XP55002388, Retrieved from the Internet: URL:http://www.flotech.com/download/greenl ane%20brochure%20Nov06%20(A4).pdf [retrieved on 2011-07-08]
- GREENLANE BIOGAS UPGRADING SYSTEMS, [Online] November 2006, page 3, XP008144893 Retrieved from the Internet: <URL:http://www.flotech.com/download/greenl ane%20brochure%20Nov06%20(A4).pdf> [retrieved on 2009-05-29]
- SUZUKI NOZOMU ET AL.: 'Development of Oil-Free Screw Compressor GP Series' IHI ENGINEERING vol. 35, no. 3, July 2002, XP008144739

## Description

### TECHNICAL FIELD

The present invention relates to gas treatment systems (apparatus and/or processes).

### BACKGROUND ART

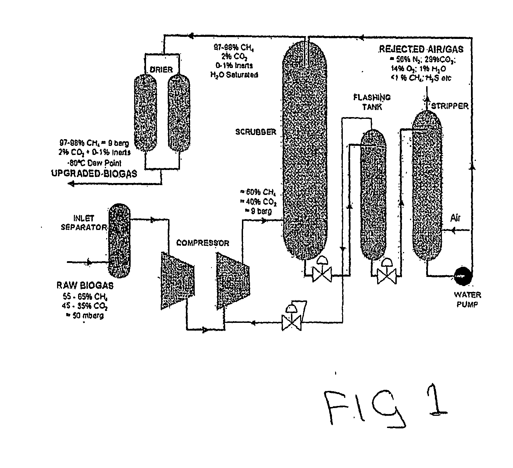

We through subsidiary Greenlane Biogas Limited and affiliated Flotech companies support systems for upgrading hydrocarbon gases or biogas. See for example our disclosures in respect of biogas upgrading from raw biogas at *www.flotech.com.* Particularly see our brochure on our website named Greenlane Brochure Nov06 "Greenlane TM Biogas Upgrading Systems. Figure 1 hereafter is the flow diagram of that brochure.

Commercial scale upgrading biogas to vehicle fuel has been popular in Sweden since 1996. Raw material for biogas production contains approximately 50% sewage sludge; the remainder comes from food industry sludge and organic waste from the surrounding region. The GREENLANE™ system upgrades the raw biogas to deliver clean, dry vehicle fuel (≈97% pure CH4) which is then usually transported via pipeline at 4 bar(g) to the city centre. Biogas fuel is compressed at the city refuelling station and stored at 250 barg, ready for filling cars, buses and trucks.

To upgrade the biogas, the GREENLANE™ Compression/Scrubbing/Flash/Methane Recover system is used, which is an advanced water scrubbing technique with regenerating water system.

GREENLANE™ technology not only produces clean fuel, it does so with an environmentally friendly and safe process: water scrubbing. This technology was developed by Flotech in the early 1990's and has now become the most popular method for production of upgraded biogas, worldwide.

Feedstock of raw biogas is normally supplied to the plant at just above atmospheric pressure and water saturated (RH 100%). Moisture and particulates are removed at the inlet separator then the gas is compressed in two stages up to = 9 bar(g) and cooled. Raw gas enters the scrubber at the bottom, contacting the process water in counter-flow towards the cleaned gas exit at the top. The scrubber has especially designed internals, which force the gas to be exposed as much as possible against the process water. CO₂ and H₂S are absorbed into the water, so the gas leaving the scrubber contains 97 - 98% CH₄ at RH 100%. The gas is then dried in a twin column PSA/TSA drier to control the dewpoint below -80°C. Product gas is analysed; if it does not meet the quality criteria for vehicle fuel, it is recycled back to the compressor inlet for reprocessing.

The process water absorbs some CH₄ during the scrubbing process; this CH₄ is recovered at intermediate pressure in the flashing tank and returned to the compressor to minimise CH₄ losses. The process water then enters the stripping system where the CO₂ is removed at atmospheric pressure - clean water is pumped from the stripper back into the scrubber process.

The process water is heated (mainly by pump energy input - a two stage pairing of rotary sliding vane type positive displacement compressors). Hence it must be cooled. Where copious cold, fresh water is available, cooling can be achieved by exchanging water from the system, to maintain process temperature. For sites where water is not freely available, or where improved process efficiency is desired, a water chilling system will be installed.

Capacity is water temperature dependent - cold water has greater capacity to absorb CO2 than warmer water. High efficiency is obtained at 7°C (as shown to the right) by process water chilling. Lowered process temperature gives reduced system pumping costs; hence total energy consumption of a plant with water chilling is lower. With only water exchange for cooling, process temperature will typically be 15°C or more.

As explained, and as can be seen in Figure 1, clean biomethane fuel is produced with a reduced use of process water owing to recycling.

It is an object of the present invention to utilise to a synergistic effect a WFS or other water cooled/lubricated type compressor where the compression is in the presence of water within the compressor ("WFS compressor") in a hydrocarbon gas and/or biogas upgrading system such as that typified by the Greenlane™ Biogas upgrading process referred to previously.

It is a further or alternative object of the present invention to provide a hydrocarbon and/or biogas upgrading system that utilises water both for cooling and lubricating the compressor system whilst downstream obviating the need for inter-stage cooling and/or liquid separation equipment.

It is a further or alternative object of the present invention to provide a single stage WFS compressor system in a hydrocarbon and/or biogas upgrading system.

It is a further or alternative object to use a WFS compressor upstream of a water scrubber in a gas treatment system of, for example, a kind previous typified.

It is still a further or alternative object to provide a system for gas purification to allow energy usage optimisation.

### DISCLOSURE OF INVENTION

Typifying such WFS compression systems are those of Svenska Rotor Maskiner AB ("SRM"') such as disclosed in their WO99/11937. That specification itself makes reference to the Swedish equivalent of US patent 4758138. Typically such compressors are twin screw.

Other documents relating to compression systems include US 3,535,057; US 6,174,148; and US 2006/213370.

In an aspect of the invention, the invention is a gas treatment process comprising harvesting the gas after a water scrubbing step, characterised in that the infeed gas is pressurised in a water flooded screw type compressor prior to the water scrubbing step, wherein the water fed into the water flooded screw type compressor is further used as process water in the water scrubbing step, wherein a portion of the process water used in the water scrubbing step is processed in a water stripping and flashing vessel and fed back to the water flooded screw type compressor.

In a further aspect the present invention consists in a gas treatment system comprising a water flooded screw type compressor to receive and compress a gas being treated in an at least oil free environment which includes water which can provide a preliminary partial scrubbing activity, a scrubber to receive the compressed gas from the compressor and to scrub that gas with water, a recovery system comprising a stripping and flashing vessel for the water and at least some of the included gas of the water from the scrubber and to recycle at least part of that recovered water for use by the compressor, and, a recovery system for the gas from the scrubber, wherein the water fed into the water flooded screw type compressor is further used as process water in the scrubber.

Preferably said recovery system for the gas from the scrubber includes a molecular sieve and/or purifying equipment.

Preferably the recovery system for the water and included gas output of the scrubber is adapted to return methane to the scrubber and/or to remove the carbon dioxide and/or remove hydrogen sulphide.

In yet a further aspect the invention consists in the use of the water flooded screw type compressor in a gas upgrading system that involves compressing the gas to be upgraded, water scrubbing the compressed gas stream, recovering the scrubbed gas as upgraded gas, and flashing and recovering gas from the water, wherein the water fed into the water flooded screw type compressor is further used as process water in the water scrubbing step, wherein a portion of the process water used in the water scrubbing step is processed in the flashing step using a stripping and flashing vessel and fed back to the water flooded screw type compressor.

This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

As used herein the term "and/or" means "and" or "or", or both.

As used herein the term "(s)" following a noun includes, as might be appropriate, the singular or plural forms of that noun.

### BRIEF DESCRIPTION OF DRAWINGS

Preferred forms will now be described with reference to the accompanying drawings in which
**Figure 1** is as previously defined viz. the flow diagram from Greenlane Brochure Nov06 (A4).pdf found at *www.flotech.com,* such a flow diagram being that of a commercialised process;
**Figure 2** shows a improved system of the present invention incorporating a WFS compressor (bounded in a broken line) of a kind as typified in the aforementioned patent specifications, and
**Figure 3** shows (bounded by a similar broken line) the complexities of a system also to be driven by a motor (not shown) that are replaceable when there is the substitution of such a WFS compressor for those hitherto used and typified in the aforementioned brochure.

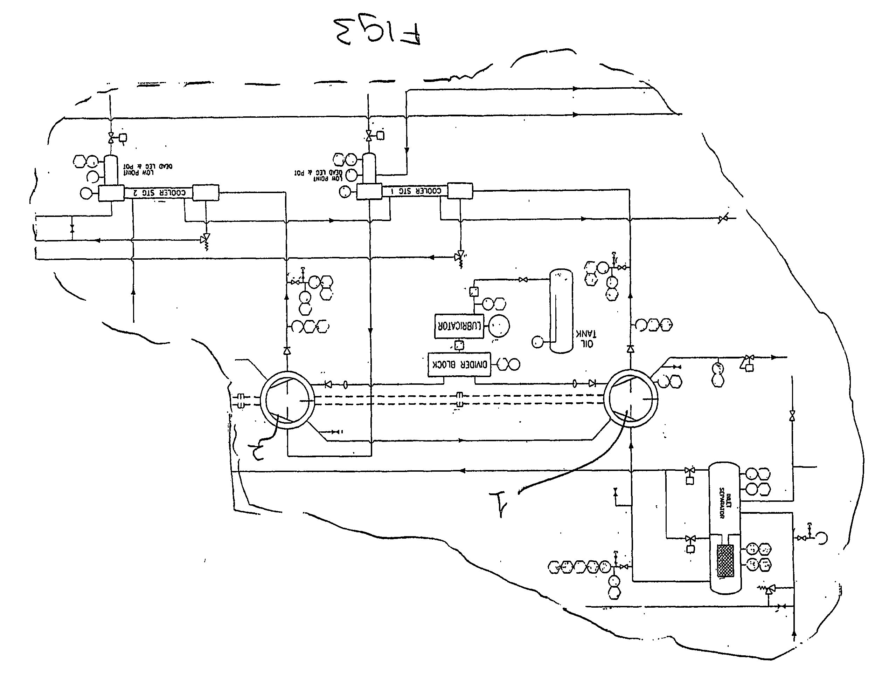

Figure 1 compressor system is or can be substantially as shown in Figure 3 where there is a first compressor 1 and a second compressor 2. Shown in Figure 3 are the complexities of such a flow diagram.

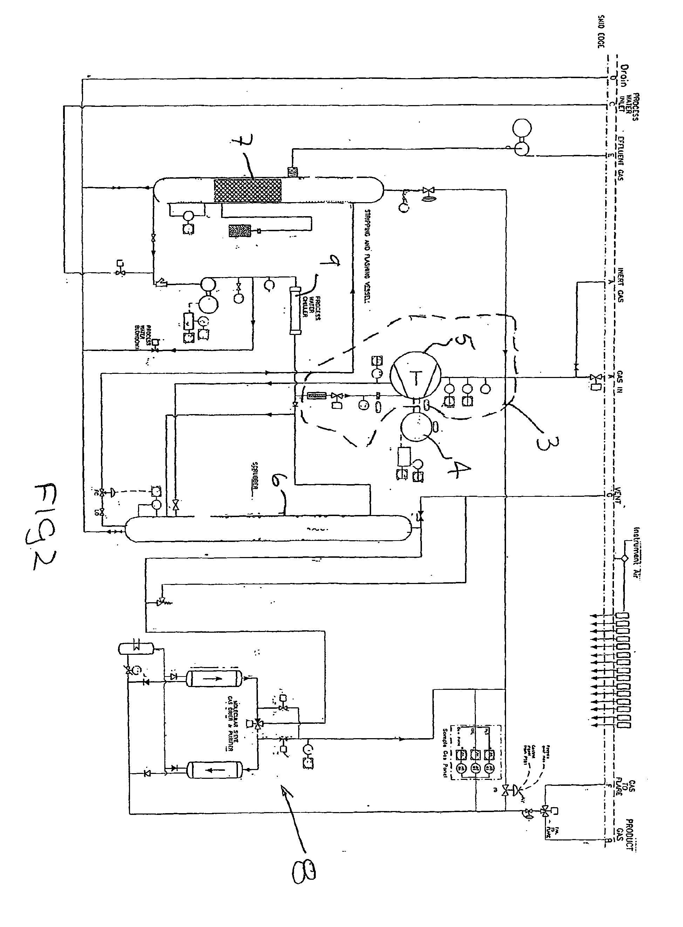

Figure 2 replaces almost all, or all of the content of Figure 3 with the enclosed region shown by the broken lines 3. Here a motor 4 operates the WFS twin screw gas compressor 5 in a system that requires little in the way of departure from that shown in Figure 1. In Figure 2 there is shown the inflows and/or outflows.

The gas is first compressed by the WFS or twin screw compressor 5 in the presence of water and is then passed for counter flow scrubbing by additional water in the scrubber 6. The water from the scrubber is then passed to the stripping and flashing vessels or vessel 7 from whence there can be recovery and feedback of water to the scrubber.

Shown in Figure 2 is recovery apparatus 8 which can include a molecular sieve gas dryer and purifier. Product gas is that gas high in methane (preferably greater than 97%) that is ducted out as product gas.

Shown in Figure 2 is a process water chiller 9 that can be interposed between the water recovery of the vessel 7 and the scrubber 6.

Operation can vary depending on through puts, gas types etc. It is envisaged that, for example, the scrubber can operate at, for example, 3 to 15 (preferably about 3 to 7 bar eg, 5 bar) with the compressor having the ability to compress gas to, for example, up to about 15 bar. The molecular sieve and gas purifier can operate at about 3 to 15 bar at a temperature of from 7 to 25°C.

By way of example of water usage in the scrubbing column a useful range is, with respect to a water/inlet gas ratio of from 0.1 to 0.3 (m³ at 20°C/Nm³ per hour).

Persons skilled in the art will appreciate variations that can occur without departure from the present invention and without a denial of any one or more of the benefits of the synergy discussed hereinafter.

It is envisaged in at least one embodiment that, in order to compress a biogas (60% methane, 39% carbon dioxide, 1-2% H₂O/ H₂S/N₂) a twin screw WFS compressor could have a 1 bar inlet pressure to receive at least 30m³/h of the biogas (eg, up to the thousands).

Intake temperature can be from 10 to 40°C (eg, 30°C) and an outlet temperature can be less than 70°C for a discharge of about 9 bar. Shaft speed(s) of a suitable compressor are 1500 to 6000 rpm.

The wet stream gas from the scrubber can be subject to a H₂S removal process as in our New Zealand Patent Specification 553992 ie, using a single vessel with activated carbon to both dry and then remove H₂S from the wet stream.

Synergy arises in a number of ways.

The drawings in the aforementioned SRM patents shows the rotary screw compressor together with a great deal of equipment that is needed to support the water circulation system.

The Greenlane drawing of Figure 3 hereof shows the compression system as presently used; this is a two stage compressor with oil lubrication, inter-stage cooling and liquids separation, a gas inlet separator and a great deal of instrumentation that is required to control and provide safety protection for the (old style) compression system. The compression system is shown (without its motor etc).

The drawing of Figure 2 shows the new combination, whereby the WFS compressor is incorporated within a modified Greenlane process. The WFS compressor and its specific instrumentation etc, is circled in broken lines.

Advantages of the new system:
1. The support system for water treatment normally required for the WFS compressor is already intrinsic in the retained parts of the combined Greenlane system and is thus utilised, eliminating much complexity.
2. The "old" two stage compressor is replaced by the single stage WFS compressor. The reason a single stage WFS compressor can do the job that previously needed two stages is because the cold water injected with the inlet gas on the WFS compressor provides lubrication, sealing and cooling of the compressor internals. It is the cooling benefit that permits a single stage; the injected water cools the gas during the compression process, allowing a much higher compression ratio to be used without over-heating of the compressor.
3. Inter-stage cooling and liquid separation equipment is eliminated by virtue of only requiring a single stage.
4. Cooling of the gas after the single stage WFS compressor is optional, because this can be accomplished by the injected water.
5. No lubrication oil is required, which avoids contamination of the water scrubbing system and saves the cost of oil, which was previously a total loss system and thus wasted. Costs of contaminated oil disposal are avoided.
6. Gas inlet separation is not required for the WFS compressor. On the "old" system this was needed to remove water mist and droplets that are naturally present in the water-saturated biogas, to prevent damage to the oil lubricated compressor. As the WFS compressor is water lubricated (and cooled) the water delivered with the biogas is beneficial.
7. Liquid separation of the gas after compression is not required because the water is separated and re-processed by the downstream system.
8. Partial scrubbing of the biogas will take place during compression due to the agitated close contact with the cold water that is injected into the WFS compressor. This reduces the required size and/or increases the available capacity of the new process system.

The water flooded/lubricated screw compressor (WFS) offers significant advantages over conventional oil fed rotary vane compressors in this application because the water fed to the compressor for sealing and lubrication (10-30% of recycled water flow and chilled to 0.5-5°C) is further used as process water in the scrubber to upgrade the raw biogas.

Furthermore using WFS technology eliminates the need for two stage compression and inter-stage cooling. Cooling water temperature rise across the WFS compressor is typically between 2-10°C with gas discharge temperatures anywhere between 3-15°C. Gas discharge temperatures from a two stage rotary vane compressor and after final cooling are typically in the range 50-60°C.

Cooling water is normally injected into the compressor at a pressure between 65-100% of the compressor discharge pressure.

## Claims

1. A gas treatment process comprising harvesting the gas after a water scrubbing step, **characterised in that** the infeed gas is pressurised in a water flooded screw type compressor (5) prior to the water scrubbing step,
wherein the water fed into the water flooded screw type compressor (5) is further used as process water in the water scrubbing step,
wherein a portion of the process water used in the water scrubbing step is processed in a water stripping and flashing vessel (7) and fed back the water flooded screw type compressor (5).

2. The process as claimed in claim 1, for raising the methane concentration in a methane including gas.

3. The process as claimed in claim 1 or claim 2, wherein the harvested gas is subjected to an H2S removal process.

4. The process as claimed in claim 1, further comprising the use of a water flooded screw type compressor (5) in a gas upgrading system that involves compressing the gas to be upgraded, water scrubbing the compressed gas stream, recovering the scrubbed gas as upgraded gas, and flashing and recovering gas from the water.

5. The process as claimed in claim 4, wherein the gas upgrading system is a water scrubbing system for upgrading hydrocarbon gases and/or biogas.

6. The process as claimed in claim 4 or claim 5 wherein said water flooded screw type compressor (5) is twin screw.

7. A gas treatment system comprising:
a water flooded screw type compressor (5) to receive and compress a gas being treated in an at least oil free environment which includes water,
a scrubber (6) to receive the compressed gas from the compressor and to scrub that gas with water, and
a recovery system (8) for recovering the gas from the scrubber (6),
**characterised in that** the system further comprises
a recovery system (7) comprising a stripping and flashing vessel (7) for the water and at least some of the included gas of the water from the scrubber (6) and to recycle at least part of that recovered water for use by the compressor (5),
wherein the water fed into the water flooded screw type compressor (5) is further used as process water in the scrubber (6).

8. The system as claimed in claim 7, wherein said recovery system (8) for the gas from the scrubber (6) includes a molecular sieve and/or purifying equipment.

9. The system as claimed in claim 7 or claim 8, wherein the recovery system (8) for the water and included gas output of the scrubber (6) is adapted to return methane to the scrubber (6) and/or to remove the carbon dioxide and/or remove hydrogen sulphide.

10. The use of a water flooded screw type compressor (5) in a gas upgrading system that involves compressing the gas to be upgraded, water scrubbing the compressed gas stream, recovering the scrubbed gas as upgraded gas, and flashing and recovering gas from the water,
wherein the water fed into the water flooded screw type compressor (5) is further used as process water in the water scrubbing step,
wherein a portion of the process water used in the water scrubbing step is processed in the flashing step using a stripping and flashing vessel (7) and fed back the water flooded screw type compressor (5).

11. The use as claimed in claim 10, wherein the gas upgrading system is a water scrubbing system for upgrading hydrocarbon gases and/or biogas.

12. The use as claimed in claim 10 or claim 11 wherein said water flooded screw type compressor (5) is twin screw.

## Patentansprüche

1. Gasbehandlungsprozess umfassend ein Ernten des Gases, nach einem Wasser-Säuberungs-Schritt, **dadurch gekennzeichnet, dass** das eingespeiste Gas in einem wasser-gefluteten Schraubentyp-Kompressor (5) vor dem Wasser-Säuberungs-Schritt unter Druck gesetzt wird,
wobei das Wasser, welches in den wasser-gefluteten Schraubentyp-Kompressor (5) eingespeist wird, ferner als ein Prozesswasser in dem Wasser-Säuberungs-Schritt verwendet wird,
wobei ein Teil des Prozesswassers, welches in dem Wasser-Säuberungs-Schritt verwendet wird, in einem Wasser-Trenn- und-Entspannungs-Gefäß (7) prozessiert wird und in den wasser-gefluteten Schraubentyp-Kompressor (5) zurückgeführt wird.

2. Prozess nach Anspruch 1, zum Anheben der Methankonzentration in einem methanhaltigen Gas.

3. Prozess nach Anspruch 1 oder Anspruch 2, wobei das geerntete Gas einem H2S-Entfernungsprozesses unterzogen wird.

4. Prozess nach Anspruch 1, ferner umfassend die Verwendung eines wasser-gefluteten Schraubentyp-Kompressors (5) in einem Gasveredelungssystem, welches ein Komprimieren des zu veredelnden Gases, ein Wasser-Säubern des komprimierten Gasstroms, ein Gewinnen des gesäuberten Gases als veredeltes Gas und ein Entspannen und Gewinnen von Gas von dem Wasser umfasst.

5. Prozess nach Anspruch 4, wobei das Gasveredelungssystem ein Wasser-Säuberungs-System zum Veredeln von Kohlenwasserstoff-Gasen und/oder Biogas ist.

6. Prozess nach Anspruch 4 oder Anspruch 5, wobei der wasser-geflutete Schraubentyp-Kompressor (5) eine Doppelschnecke ist.

7. Gasbehandlungssystem umfassend:
einen wasser-gefluteten Schraubentyp-Kompressor (5) zum Aufnehmen und Komprimieren eines zu behandelnden Gases in einer wenigstens öl-freien Umgebung, welche Wasser umfasst,
eine Säuberungsvorrichtung (6) zum Aufnehmen des komprimierten Gases von dem Kompressor und zum Säubern des Gases mit Wasser, und
ein Gewinnungs-System (8) zum Gewinnen des Gases von der Säuberungsvorrichtung (6),
**dadurch gekennzeichnet, dass** das System ferner umfasst ein Gewinnungs-System (7), umfassend ein Trenn- und Entspannungs-Gefäß (7) für das Wasser und wenigstens einen Teil des enthaltenen Gases des Wassers von der Säuberungsvorrichtung (6) und zum Recyceln wenigstens eines Teils des gewonnenen Wassers für eine Verwendung durch den Kompressor (5),
wobei das Wasser, welches in den wasser-gefluteten Schraubentyp-Kompressor (5) eingespeist wird, ferner als Prozesswasser in der Säuberungsvorrichtung (6) verwendet wird.

8. System nach Anspruch 7, wobei das Gewinnungs-System (8) für das Gas von der Säuberungsvorrichtung (6) ein Molekularsieb und/oder Reinigungsequipment umfasst.

9. System nach Anspruch 7 oder Anspruch 8, wobei das Gewinnungs-System (8) für das Wasser und das aus der Säuberungsvorrichtung (6) ausgegebene enthaltene Gas dazu eingerichtet ist, Methan an die Säuberungsvorrichtung (6) zurückzuführen und/oder das Kohlendioxid zu entfernen und/oder Schwefelwasserstoff zu entfernen.

10. Verwendung eines wasser-gefluteten Schraubentyp-Kompressors (5) in einem Gasveredelungssystem, welches ein Komprimieren des zu veredelndes Gases, eine Wasser-Säuberung des komprimierten Gasstroms, ein Gewinnen des gesäuberten Gases als veredeltes Gas und ein Entspannen und Gewinnen von Gas von dem Wasser umfasst, wobei das Wasser, welches in den wasser-gefluteten Schraubentyp-Kompressor (5) eingespeist wird, ferner als Prozesswasser in dem Wasser-Säuberungs-Schritt verwendet wird,
wobei ein Teil des Prozesswassers, welches in dem Wasser-Säuberungs-Schritt verwendet wird, in dem Entspannungs-Schritt unter Verwendung eines Trenn- und Entspannungs-Gefäßes (7) prozessiert wird und zurück in den wasser-gefluteten Schraubentyp-Kompressor (5) gespeist wird.

11. Verwendung nach Anspruch 10, wobei das Gasveredelungssystem ein Wasser-Säuberungs-System zum Veredeln von Kohlenwasserstoff-Gasen und/oder Biogas ist.

12. Verwendung nach Anspruch 10 oder Anspruch 11, wobei der wasser-geflutete Schraubentyp-Kompressor (5) eine Doppelschnecke ist.

## Revendications

1. Procédé de traitement de gaz comprenant la collecte de gaz après une étape de lavage à l'eau,
**caractérisé en ce que** le gaz entrant est pressurisé dans un compresseur à vis rempli d'eau (5) avant l'étape de lavage à l'eau,
l'eau introduite dans le compresseur à vis rempli d'eau (5) étant utilisée en outre comme eau de traitement dans l'étape de lavage à l'eau,
une partie de l'eau de traitement utilisée dans l'étape de lavage à l'eau étant utilisée dans un récipient (7) de stripping et flashing et réintroduite dans le compresseur à vis rempli d'eau (5).

2. Procédé selon la revendication 1, pour augmenter la concentration de méthane dans un gaz comprenant du méthane.

3. Procédé selon la revendication 1 ou la revendication 2, où le gaz collecté est soumis à un procédé d'extraction de H₂S.

4. Procédé selon la revendication 1, comprenant en outre l'utilisation d'un compresseur à vis rempli d'eau (5) dans un système d'amélioration de gaz qui implique la compression du gaz à améliorer, un lavage à l'eau du flux de gaz comprimé, la récupération du gaz lavé comme gaz amélioré et soumission du gaz au flashing et récupération de gaz de l'eau.

5. Procédé selon la revendication 4, où le système d'amélioration de gaz est un système de lavage de gaz pour des gaz d'hydrocarbures et/ou de biogaz.

6. Procédé selon la revendication 4 ou la revendication 5, où le compresseur à vis rempli d'eau (5) est un type à deux vis.

7. Système de traitement de gaz comprenant :
un compresseur à vis rempli d'eau pour recevoir et comprimer un gaz à traiter dans un environnement exempte au moins d'huile et qui comprend de l'eau,
un dispositif de lavage (6) pour recevoir le gaz comprimé du compresseur et pour laver le gaz à l'eau, et
un système de récupération (8) pour récupérer le gaz du dispositif de lavage (6),
**caractérisé en ce que** le système comprend en outre
un système de récupération (7) comprenant un récipient de stripping et de flashing (7) pour l'eau et au moins une partie du gaz inclus dans l'eau du dispositif de lavage (6) et pour recycler au moins une partie de l'eau récupérée pour une utilisation par le compresseur (5),
l'eau introduite dans le compresseur à vis rempli d'eau (5) étant utilisée en outre comme eau de traitement dans le dispositif de lavage (6).

8. Système selon la revendication 7, où le système de récupération (8) pour le gaz du dispositif de lavage (6) comprend un équipement de tamisage moléculaire et/ou de purification.

9. Système selon la revendication 7 ou la revendication 8, où le système de récupération (8) pour l'eau et le gaz inclus venant du dispositif de lavage (6) est adapté pour retourner du méthane au dispositif de lavage (6) et/ou pour extraire du dioxyde de carbone et/ou extraire du sulfure d'hydrogène.

10. Utilisation d'un compresseur à vis rempli d'eau (5) dans un système d'amélioration qui comprend comprimer le gaz à améliorer, lavage à l'eau du flux de gaz comprimé, récupérer le gaz lavé comme gaz amélioré et soumission au flashing et récupération du gaz de l'eau,
où l'eau introduite dans le compresseur à vis rempli d'eau (5) est utilisée en outre comme eau de traitement dans l'étape de lavage à l'eau,
où une partie de l'eau de traitement utilisée dans l'étape de lavage à l'eau est utilisée dans un récipient de stripping et flashing (7) et réintroduite dans le compresseur à vis rempli d'eau (5).

11. Utilisation selon la revendication 10, où le système d'amélioration de gaz est un système de lavage à l'eau pour améliorer des gaz d'hydrocarbures et/ou de biogaz.

12. Utilisation selon la revendication 10 ou la revendication 11, où le compresseur à vis rempli d'eau (5) est un type à deux vis.
